# EUROPÄISCHE PATENTANMELDUNG

(11) **EP 4 130 341 A1**
(43) Veröffentlichungstag der Anmeldung: **08.02.2023**
(21) Anmeldenummer: 21190122.8
(22) Anmeldetag: 06.08.2021
(51) Int. Cl.: C25B 1/04, C25B 9/23, C25B 11/02, C25B 11/032, C25B 11/051, C25B 11/063, C25B 11/077

(54) **ELEKTROLYSEZELLE ZUR POLYMERELEKTROLYTMEMBRAN-ELEKTROLYSE UND VERFAHREN ZU DEREN HERSTELLUNG**

(71) Anmelder: Siemens Energy Global GmbH & Co. KG, 81739 München (DE)
(72) Erfinder: Klinger, Andre, 90429 Nürnberg (DE); Musayev, Yashar, 90425 Nürnberg (DE)

(57) **Zusammenfassung**

Es wird eine Elektrolysezelle (1) zur Polymerelektrolytmembran-Elektrolyse mit einer kathodischen Halbzelle (2) und einer anodischen Halbzelle (3) beschrieben, wobei die kathodische Halbzelle (2) und die anodische Halbzelle (3) mittels einer Polymerelektrolytmembran (4) voneinander getrennt sind. Die anodische Halbzelle (3) weist eine Gasdiffusionsschicht (9b) auf, die zur Hemmung des Eintrags eines anodischen Katalysatormaterials (18) in die Gasdiffusionsschicht (9b) ausgebildet ist.

Weiterhin wird ein Verfahren (100) zur Herstellung einer Elektrolysezelle (1) zur Polymerelektrolytmembran-Elektrolyse angegeben.

## Beschreibung

Die Erfindung betrifft eine Elektrolysezelle zur Polymerelektrolytmembran-Elektrolyse, ein Verfahren zur Herstellung einer solchen Elektrolysezelle, die Verwendung einer solchen Elektrolysezelle sowie die Verwendung eines Katalysatormaterials.

Wasserstoff kann mittels Elektrolyse aus deionisiertem Wasser gewonnen werden. Dabei laufen die elektrochemischen Zellreaktionen der Wasserstoffbildungsreaktion (HER) und Sauerstoffbildungsreaktion (OER) ab. Im Fall der sauren Elektrolyse können die genannten Reaktionen an Anode und Kathode wie folgt definiert werden: Anode 2

H₂O → 4 H⁺ + O₂ + 4 e⁻ (I)

Kathode

H⁺ + 2 e⁻ → H₂ (II)

Bei der sogenannten Polymer-Elektrolyt-Membran-Elektrolyse (PEM-Elektrolyse) werden die zwei Teilreaktionen gemäß den Gleichungen (I) und (II) räumlich getrennt voneinander in einer jeweiligen Halbzelle für OER und HER durchgeführt. Die Trennung der Reaktionsräume erfolgt mittels einer protonenleitfähigen Membran, der Polymer-Elektrolyt-Membran (PEM), auch unter dem Begriff Protonenaustauschmembran bekannt. Die PEM sorgt für eine weitgehende Trennung der Produktgase Wasserstoff und Sauerstoff, die elektrische Isolierung der Elektroden sowie die Leitung der Wasserstoffionen (Protonen) als positiv geladene Teilchen. Eine PEM-Elektrolyseanlage umfassend typischerweise eine Mehrzahl von PEM-Elektrolysezellen, wie etwa in der EP 3 489 394 A1 beschrieben.

Eine PEM-Elektrolysezelle ist beispielsweise in der EP 2 957 659 A1 beschrieben. Die dort gezeigte PEM-Elektrolysezelle umfasst einen Elektrolyten aus einer protonenleitenden Membran (Proton-Exchange-Membrane, PEM), auf welcher sich beidseitig die Elektroden, eine Kathode und eine Anode, befinden. Die Einheit aus Membran und Elektroden wird als Membran-Elektroden-Einheit (MEA) bezeichnet. An den Elektroden liegt jeweils eine Gasdiffusionsschicht an. Die Gasdiffusionsschichten werden von sogenannten Bipolarplatten kontaktiert. Eine jeweilige Bipolarplatte bildet häufig zugleich eine Kanalstruktur, die für den Medientransport der Beteiligten Edukt- und Produktströme ausgestaltet ist. Zugleich trennen die Bipolarplatten die einzelnen Elektrolysezellen voneinander, die zu einem Elektrolyse-Stack mit einer Vielzahl von Elektrolysezellen gestapelt sind. Die PEM-Elektrolysezelle wird mit Wasser als Edukt gespeist, welches an der Anode elektrochemisch in Sauerstoff-Produktgas und Protonen H⁺ zerlegt wird. Die Protonen H⁺ wandern durch die Elektrolytmembran in Richtung der Kathode. Auf der Kathodenseite rekombinieren sie zu Wasserstoff-Produktgas H₂.

Die genannten Zellreaktionen gemäß den Gleichungen (I) und (II) befinden sich unter Berücksichtigung des Entropiezuwachses bei Wechsel des flüssigen Wassers zum gasförmigen Wasserstoff bzw. Sauerstoff bei einer Zellspannung von 1,48 V mit ihren Rückreaktionen im Gleichgewicht. Um entsprechend hohe Produktströme in angemessener Zeit (Produktionsleistung) und damit einen Stromfluss zu erreichen, ist eine höhere Spannung, die Überspannung, notwendig. Die PEM-Elektrolyse wird deshalb bei einer Zellspannung von ca. 1,8 - 2,1 V durchgeführt.

Eine PEM-Elektrolysezelle ist auch beschrieben in Kumar, S, et al., Hydrogen production by PEM water electrolysis - A review, Materials Science for Energy Technologies, 2 (3) 2019, 442-454. https://doi.org/10.1016/j.mset.2019.03.002. Die PEM-Elektrolysezelle besteht von außen nach innen betrachtet, aus zwei Bipolarplatten, Gasdiffusionsschichten, Katalysatorschichten und der protonenleitfähigen Membran.

An der Anode ergeben sich auf Grund der Bildungsreaktion des Sauerstoffs hohe oxidative Potentiale, weshalb an der Anode hochwertige Werkstoffe mit einer schnellen Passivierungskinetik, z. B. Titan, beispielsweise für die Gasdiffusionsschicht eingesetzt werden. Dies gilt auch für die Materialwahl des anodenseitigen Katalysatormaterials. Allerdings lassen sich selbst dadurch an der Anode die Degradationseffekte nicht gänzlich vermeiden, sondern allenfalls hinauszögern.

Kathodisch ist das Potential hingegen weniger oxidativ, so dass dort die Gasdiffusionsschichten aus Edelstahl gefertigt werden können. Allerdings korrodieren diese unter anderem durch das saure Milieu der PEM-Elektrolyse. Dieser Korrosionsprozess wird als Säurekorrosion bezeichnet. Hierbei ist ein Vorliegen von elementarem Sauerstoff nicht notwendig, da dieser allein schon durch die Dissoziation des umliegenden Wassers bereitgestellt wird. Die Metallionen an der Grenzfläche der Metalloberfläche werden durch das Hydroxidanion zum jeweiligen Hydroxidsalz oxidiert. Dies führt zu einer Degradation der Zelle, welche sich durch einen erhöhten Innenwiderstand und durch Fremdeintrag von Ionen in die PEM äußert.

Im Stand der Technik sind verschiedene Ansätze beschrieben, um den vorstehend erläuterten Degradationseffekte an der Anode und an der Kathode zu begegnen. So wurde beispielsweise für den anodenseitigen Katalysator vorgeschlagen in der Katalysatorschicht eine größere Menge an katalytisch aktiver Spezies in die anodische Katalysatorschicht einzubringen, d.h. eine höhere Konzentration an katalytisch aktiver Spezies vorzuhalten. Hierdurch lassen sich insbesondere Degradationseffekte der Anode hinsichtlich der katalytischen Aktivität zumindest temporär ausgleichen. Um anodenseitig Degradationseffekte durch lokale elektrische Kontaktwiderstände und eine damit einhergehende inhomogene Stromverteilung in dem Verbundsystem Gasdiffusionsschicht und Katalysatorschicht zu vermindern, wurde unter anderem die Optimierung des Anpressdrucks der Gasdiffusionsschicht an die Katalysatorschicht vorgeschlagen. Dies birgt jedoch stets die Gefahr einer Perforation der Membran-Elektroden-Einheit (MEA) durch einen übermäßig hohen Anpressdruck beim Zusammenfügen und der axialen Stapelung der Elektrolysezellen zu einem Elektrolyse-Stack und dessen mechanischer Verspannung mit einer hohen Axialkraft. Dies führt zu Kurzschlüssen, wodurch die Elektrolysezelle unbrauchbar und der Betrieb des Elektrolyseurs erheblich gefährdet oder sogar ausgeschlossen ist.

Die vorstehend genannten Ansätze lösen somit nicht die eigentlichen Probleme der Degradation, insbesondere an der Anode, nicht hinreichend dauerhaft und zuverlässig. Sie stellen allenfalls temporär wirkende Maßnahmen dar, um die Degradationseffekte zu vermindern und zeitlich zu strecken, greifen aber nicht die Ursache an.

Vor diesem Hintergrund ist es Aufgabe der Erfindung, eine Elektrolysezelle zur Verfügung zu stellen, mit der die vorstehend genannten Probleme verringert oder möglichst gänzlich vermieden werden können. Eine weitere Aufgabe der Erfindung ist es, ein Verfahren zur Herstellung einer solchen Elektrolysezelle anzugeben.

Gelöst wird diese Aufgabe durch die Gegenstände der unabhängigen Ansprüche. Die abhängigen Ansprüche betreffen bevorzugte Ausgestaltungen der erfindungsgemäßen Lösungen.

Ein erster Aspekt der Erfindung betrifft eine Elektrolysezelle zur Polymer-Elektrolyt-Membran-Elektrolyse mit einer kathodischen Halbzelle und mit einer anodischen Halbzelle, wobei die kathodische Halbzelle und die anodische Halbzelle mittels einer Polymer-Elektrolyt-Membran voneinander getrennt sind. Die anodische Halbzelle weist eine Gasdiffusionsschicht auf, die zur Hemmung des Eintrags eines anodischen Katalysatormaterials in die Gasdiffusionsschicht ausgebildet ist.

Zu den Begriffen Elektrolyse und Polymer-Elektrolyt-Membran sowie den ablaufenden Reaktionen und Korrosions- und weiterer elektrochemischer Prozesse wird auf die einleitenden Erläuterungen verwiesen. Die Polymer-Elektrolyt-Membran kann beispielsweise aus einem tetrafluorethylen-basierten Polymer mit sulfonierten Seitengruppen gebildet sein. Die kathodische Halbzelle bildet den Reaktionsraum, in dem die Kathodenreaktion(en), z. B. gemäß Gleichung (II) ablaufen. Die anodische Halbzelle bildet den Reaktionsraum, in dem die Anodenreaktion(en), z. B. gemäß Gleichung (I) ablaufen.

Die Erfindung geht hierbei bereits von der Erkenntnis aus, dass bei einer Elektrolysezelle insbesondere auf der Seite der anodischen Halbzelle zur Vermeidung oder Verminderung von technischen Problemen und Einschränkungen aufgrund von Degradationseffekten bisher nur unzureichende Lösungsansätze vorgeschlagen wurden, die nicht an der Ursache ansetzen. So sind beispielsweise bei der Wasserelektrolyse bei einer Elektrolysezelle zwei nachteilige Effekte zu beobachten, die mit der Erfindung weitgehend vermieden oder sogar überwunden werden:
Einerseits der Eintrag von anodischem Katalysatormaterial in die Gasdiffusionsschicht mit der damit einhergehenden Bildung von Mischphasen in der Gasdiffusionsschicht. Dies führt zu einer Verringerung der katalytischen Aktivität der Anode und zu einer Degradation der Elektrode insgesamt während des Betriebs, was sehr nachteilig ist. Auch wird ein späterer Aufarbeitungsprozess einer über die Lebensdauer eines Elektrolyseurs genutzten Gasdiffusionsschicht erschwert.

Andererseits ist im Betrieb eine Erhöhung des lokalen elektrischen Kontaktwiderstandes zu beobachten. Dieser hat eine wesentliche Ursache in einer sich rasch zeigenden Oxidation (Passivierung) des Materials im Betrieb der Gasdiffusionsschicht. Die Oxidation ist vorwiegend an der Oberfläche der Gasdiffusionsschicht und angrenzenden stromführenden elektrischen Kontaktflächen zu verzeichnen. Diese dann aufgrund der Oxidation elektrisch schlecht leitenden lokalen Kontaktflächen führen zu hohen ohmschen Verlusten in der Elektrolysezelle und zu einer notwendigen Erhöhung der Zellspannung bei konstanter Stromdichte. Effizienzeinbußen und Degradation der Anode sind hier die Folge von inhomogener Stromverteilung mit nachteiligen lokalen Stromspitzen.

Die Erfindung begegnet beiden Problemen mit einer vorteilhafterweise als Diffusionsbarriere gegenüber dem Eintrag von anodischen Katalysatormaterial ausgestalteten und entsprechend wirkenden Gasdiffusionsschicht. Der sukzessive Abbau im Betrieb und damit der Verlust von anodischen Katalysatormaterial ist durch die Hemmung des Eintrags von Katalysatormaterial in die Gasdiffusionsschicht vermieden. Die katalytische Aktivität bleibt erhalten und die Gasdiffusionsschicht ist zugleich vor Degradation geschützt und kann ihre Funktion in einem Elektrolyseur erfüllen.

Die Ausbildung der Gasdiffusionsschicht mit einer vorteilhaften Wirkung als Diffusionsbarriere dient dazu, die Bewegungen von Atomen und Molekülen zwischen den in der anodischen Halbzelle angrenzenden Materialien zu unterbinden, hier die Hemmung des Eintrags von anodischem Katalysatormaterial und dem Grundmaterial der Gasdiffusionselektrode. Somit sind die Diffusionsprozesse mit der Erfindung besonders effektiv und nachhaltig unterbunden, die ansonsten mit der Zeit zu Verunreinigungen bzw. unerwünschten chemischen Reaktionen führen würden, wie in den bekannten Konzepten. Insbesondere ist eine Barriere gegen den Eintrag von anodischem Katalysatormaterial in die Gasdiffusionsschicht geschaffen.

Weiterhin wirkt die Diffusionsbarriere zugleich als Schutz der elektrisch leitenden Gasdiffusionsschicht vor Oxidation und damit nachteiligen elektrischen Leitfähigkeitsverlusten, wodurch die lokalen Kontakte deutlich verbessert werden. Die Gasdiffusionsschicht kann ihre Aufgabe für den elektrischen Transport sowie für den Stofftransport weiter erfüllen. Die Stromdichte über die effektive Zellfläche der Elektrolysezelle wird homogener, was von Vorteil ist.

In einer besonders vorteilhaften Ausgestaltung weist die Gasdiffusionsschicht eine Schutzschicht auf, in die ein diffusionshemmendes Schichtmaterial eingebracht ist.

Unter einer Schicht kann im Zusammenhang mit der vorliegenden Erfindung ein flächiges Gebilde verstanden werden, dessen Abmessungen in der Schichtebene, Länge und Breite, deutlich größer als die Abmessung in der dritten Dimension, die Schichtdicke, sind.

Das Einbringen von Material in Schichten, beispielsweise diffusionshemmendes Schichtmaterial oder andere Materialien, ermöglicht auf besonders einfache Art und Weise die Realisierung einer vorgebbaren Verteilung der Materialien in der anodischen Halbzelle. Zudem kann die Handhabung der Katalysatormaterialien erleichtert sein.

Somit ist es vorzugsweise möglich, dass die Gasdiffusionsschicht, die aus einem Grundkörper aus einem Grundmaterial ausgebildet ist, auf den die diffusionshemmende Schutzschicht flächig aufgebracht ist. Somit bildet bei der Gasdiffusionsschicht der Grundkörper mit dem Grundmaterial eine erste Schicht und die diffusionshemmende Schutzschicht eine zweite Schicht der Gasdiffusionsschicht.

Gemäß einer weiteren bevorzugten Ausführungsform ist das anodische Katalysatormaterial in eine anodische Katalysatorschicht eingebracht.

Hierdurch ist eine anodische Katalysatorschicht gegeben, die in eine entsprechende, eigens dafür vorgesehene Katalysatorschicht, eingebracht ist. Dabei kann die Katalysatorschicht benachbart, bevorzugt unmittelbar benachbart, also in direktem Kontakt, zur Gasdiffusionsschicht angeordnet sein, wobei die anodische Katalysatorschicht und die Schutzschicht in Kontakt stehen. Bevorzugt ist also die anodische Katalysatorschicht unmittelbar benachbart zur Schutzschicht angeordnet, so dass ein flächiger Kontakt bewirkt ist.

Mit anderen Worten können die flächig ausgebildete diffusionshemmende Schutzschicht und die anodische Katalysatorschicht unter Ausbildung einer parallel zu den jeweiligen Schichtebenen angeordneten Grenzflächen direkt aneinandergrenzen, z. B. direkt aufeinander angeordnet sein. Ein Eintrag von anodischem Katalysatormaterial aus der anodischen Katalysatorschicht in die Gasdiffusionsschicht ist hierbei die diffusionshemmende Schutzschicht unterbunden oder zumindest weitgehend vermieden.

Gemäß einer weiteren bevorzugten Ausführungsvarianten ist die anodische Katalysatorschicht benachbart, bevorzugt direkt benachbart, also in direktem Kontakt, zur Polymer-Elektrolyt-Membran angeordnet.

Dementsprechend können die ebenfalls flächig ausgebildete Polymer-Elektrolyt-Membran und die anodische Katalysatorschicht unter Ausbildung einer parallel zu der Schichtebene angeordneten Grenzfläche direkt aneinandergrenzen, z. B. direkt aufeinander angeordnet sein.

Ist die diffusionshemmende Schutzschicht der Gasdiffusionsschicht ebenfalls benachbart zur der anodischen Katalysatorschicht angeordnet, ergibt sich eine Anordnung, bei der die anodische Katalysatorschicht auf der einen Seite an die diffusionshemmende Schutzschicht und auf der gegenüberliegenden Seite an die Polymer-Elektrolyt-Membran angrenzt.

Gemäß weiteren Ausführungsvarianten kann die anodische Halbzelle der Elektrolysezelle eine Gasdiffusionsschicht aufweisen. Die Gasdiffusionsschicht kann benachbart, bevorzugt direkt benachbart, zur der anodischen Katalysatorschicht angeordnet sein.

Die Gasdiffusionsschicht der Elektrolysezelle dient dem Abtransport der gasförmigen Reaktionsprodukte der katalytischen Reaktion(en) von dem bzw. den Katalysatormaterial(ien) sowie der elektrischen Kontaktierung. Sie kann daher auch als Stromkollektorschicht oder Gasdiffusionselektrode bezeichnet werden. Mit der Erfindung wird einerseits eine besonders homogene Stromdichteverteilung erreicht, so dass im Betrieb lokale Stromspitzen vermieden sind. Zum anderen ist die katalytische Aktivität der anodischen Katalysatorschicht langzeitstabil, da eine Degradation der anodischen Halbzelle durch Vermeidung des Eintrags von anodischem Katalysatormaterial in die Gasdiffusionsschicht gehemmt ist.

Die Gasdiffusionsschicht der anodischen Halbzelle weist zur Gewährleistung einer hinreichenden Gasdurchlässigkeit ein poröses Material auf. Die Gasdiffusionsschicht kann beispielsweise aus Titan als Grundwerkstoff mit einem porös ausgestalteten Grundkörper, etwa ein titanbasiertes Streckmetall oder Drahtgeflecht, gefertigt und mit der diffusionshemmenden Schutzschicht versehen sein. Hierdurch kann die Nutzungsdauer bzw. Lebensdauer der Gasdiffusionsschicht erhöht werden, die beschriebenen nachteiligen Degradationseffekte reduziert sind.

In besonders bevorzugter Ausgestaltung weist die Schutzschicht eine Schichtdicke von etwa 50 nm bis 200 nm auf, insbesondere von etwa 80 nm bis 120 nm. Selbst geringe Schichtdicken von lediglich um die 100 nm sind ausreichend, um die diffusionshemmende Wirkung einzustellen. Zur Ausbildung dieser Diffusionsbarriere sind verglichen mit typischen Schichtdicken einer Katalysatorschicht nur sehr geringe Mengen an Schichtmaterial für die Schutzschicht erforderlich. Eine geringe Schichtdicke ist von wirtschaftlichem Vorteil, da nur ein geringerer Materialeinsatz für die Schutzschicht erforderlich ist.

In bevorzugter Ausgestaltung ist in die Schutzschicht ein katalytisch aktives Schichtmaterial eingebracht. Durch diese Materialwahl für die Schutzschicht ist neben der Wirkung als Diffusionsbarriere gegenüber dem anodischen Katalysatormaterial zugleich eine katalytische Wirkung erzielbar. Durch das gezielte Einbringen von Katalysatormaterial in die Schutzschicht ist an der Grenzfläche zwischen Gasdiffusionsschicht und anodischer Katalysatorschicht eine Sättigung mit Katalysatormaterial bewirkt. Durch diese Sättigung ist der weitere Eintrag von anodischem Katalysatormaterial in die Gasdiffusionsschicht gehemmt, die Kinetik der weiteren Aufnahme von anodischem Katalysatormaterial praktisch unterbunden.

In besonders bevorzugter Ausgestaltung ist als katalytisches Schichtmaterial anodisches Katalysatormaterial eingebracht. Durch die Gleichartigkeit der Materialwahl sind Anpassungsprobleme vermieden. Insbesondere ist eine katalytische Wirkung langzeitstabil bei einer gleichzeitigen effektiven Wirkung gegenüber der Migration durch Diffusion von anodischem Katalysatormaterial aus der anodischen Katalysatorschicht in die Gasdiffusionsschicht. Die anodische Katalysatorschicht baut sich nicht ab. Darüber hinaus ist durch das katalytische Schichtmaterial in der Schutzschicht bereits eine Passivierung bewirkt, ein oxidativer Angriff auf das Grundmaterial der Gasdiffusionsschicht ist mithin unterbunden.

Der durch diese vorteilhafte Ausgestaltung hier gezielt ausgenutzte Wirkmechanismus ist derart, dass sich durch das Aufbringen einer dichten Schutzschicht auf das anodenseitige Grundmaterial der Gasdiffusionsschicht, keine weniger leitfähige Oxidschicht aus Sauerstoff und dem Grundmaterial mehr bilden kann, da der für die Passivierung des Grundmaterials benötige Sauerstoff nicht mehr zur Verfügung steht. Die Rolle der Passivschicht erledigt nun das katalytische Schichtmaterial. Die in der anodischen Katalysatorschicht bzw. am aktiven Zentrum des anodischen Katalysators freiwerdenden Elektronen können über die Schutzschicht in das Bulk-Material ohne erhöhten Widerstand überführt werden. Dies führt dazu, dass die lokalen Kontakte erheblich verbessert werden und damit die Stromdichte über die Zellfläche homogener wird.

In besonders bevorzugter Ausgestaltung weist die anodische Halbzelle Iridium und/oder Iridiumoxid oder deren Mischungen als anodisches Katalysatormaterial auf. Aufgrund der hohen Oxidations- und Lösungsstabilität ist Iridium bzw. Iridiumoxid besonders vorteilhaft als katalytisch aktive Spezies bei der Wahl des anodenseitigen Katalysatormaterials.

Weiterhin bevorzugt weist die anodische Halbzelle eine aus Titan als Grundmaterial gebildete Gasdiffusionsschicht auf. Man verwendet hier bevorzugt eine Ausgestaltung als feinmaschigeres Titanmaterial als Grundmaterial für die Gasdiffusionsschicht, beispielsweise Titanvliese, Titanschäume, Titangewebe, titanbasierte Streckgitter oder Kombinationen daraus. Hierdurch werden auch die lokalen Kontaktpunkte zur Elektrode erhöht und der elektrische Widerstand in der Kontaktfläche besonders gleichmäßig. Der Begriff "Gitter" bezeichnet im vorliegenden Zusammenhang ein feinmaschiges Netz. Die genannten Trägermaterialien zeichnen sich durch eine hohe Korrosionsbeständigkeit aus. Die Begriffe "Gitter" und "Gewebe" beschreiben eine gerichtete Struktur, der Begriff "Vlies" eine ungerichtete Struktur.

Auf das Titan Grundmaterial oder Trägermaterial der Gasdiffusionsschicht kann das diffusionshemmende und katalytisch wirkende Schichtmaterial, insbesondere Iridium bzw. Iridiumoxid, aufgebracht werden. Dies ermöglicht vorteilhaft eine gleichmäßige Verteilung des Schichtmaterials. Zudem kann das Schichtmaterial mit möglichst großer Oberfläche bereitgestellt werden, so dass bei gleichbleibender Menge an Schichtmaterial die katalytische Wirkung und die Passivierungswirkung verbessert werden kann, wobei durch die geringen Schichtdicken von etwa 100 nm für die Schutzschicht ein sehr geringer Materialeinsatz erforderlich ist.

Mit anderen Worten ist ein Vorteil eines Grundkörpers oder Trägermaterials für die Gasdiffusionsschicht, dass eine höhere spezifische Oberfläche generiert werden kann, wodurch die Aktivität des entsprechenden Katalysatormaterials entsprechend steigt sowie die hier von besonderem Vorteil sich ergebenden Passivierungseigenschaften. Ein weiterer Vorteil sind die durch die höhere Oberfläche entstehenden Kontaktpunkte, wodurch der Kontaktwiderstand und die Querleitfähigkeit verbessert werden.

Zur Verringerung der Korrosion ist die Gasdiffusionsschicht üblicherweise aus einem Material hergestellt, auf dessen Oberfläche sich schnell eine Passivierungsschicht ausbildet, wie dies bei Titan der Fall ist. Durch die Schutzschicht wird die Passivierung vorliegend allerdings nicht durch das Titan selbst, sondern durch das Iridium bewirkt, was sehr vorteilhaft ist. Durch das Iridium in der Schutzschicht wirkt diese als Katalysator und Diffusionsbarriere. Überdies ist die Gasdiffusionsschicht elektrisch leitend und porös für den Fluidtransport und die Stromverteilung entsprechend ausgestaltet.

Optional kann benachbart, bevorzugt direkt benachbart, zur Gasdiffusionsschicht eine Kanalstruktur angeordnet sein. Die Kanalstruktur dient dem Sammeln und Austragen des gasförmigen Reaktionsprodukts der Elektrolyse in der anodischen Halbzelle, also z. B. Sauerstoff gemäß Gleichung (I). Die Kanalstruktur kann beispielsweise als Bipolarplatte ausgebildet sein. Bipolarplatten ermöglichen das Stapeln mehrerer Elektrolysezellen zu einem Elektrolysezellenmodul, indem sie die Anode einer Elektrolysezelle mit der Kathode einer benachbarten Elektrolysezelle elektrisch leitend verbindet. Zudem ermöglicht die Bipolarplatte eine Gastrennung zwischen aneinander angrenzenden Elektrolysezellen.

Ein weiterer Aspekt der Erfindung betrifft ein Verfahren zur Herstellung einer Elektrolysezelle zur Polymerelektrolytmembran-Elektrolyse. Das Verfahren weist auf: Bereitstellen einer Polymerelektrolytmembran, Ausbilden einer an die Polymerelektrolytmembran angrenzenden kathodischen Halbzelle und Ausbilden einer an die Polymerelektrolytmembran angrenzenden anodischen Halbzelle, wobei die kathodische Halbzelle und die anodische Halbzelle mittels der Polymerelektrolytmembran voneinander getrennt angeordnet werden und eine Gasdiffusionsschicht, ausgebildet zur Hemmung des Eintrags eines anodischen Katalysatormaterials in die Gasdiffusionsschicht, in der anodischen Halbzelle angeordnet wird.

Mittels des Verfahrens kann eine der vorstehend beschriebenen Elektrolysezelle zur Polymer-Elektrolyt-Membran-Elektrolyse hergestellt werden. Entsprechend wird auf die vorstehenden Erläuterungen und Vorteile dieser Elektrolysezellen verwiesen.

Gemäß einer bevorzugten Ausführungsvariante wird eine Schutzschicht mit einem diffusionshemmenden Schichtmaterial in die Gasdiffusionsschicht eingebracht.

Gemäß einer weiteren bevorzugten Ausführungsvariante wird anodisches Katalysatormaterial in eine anodische Katalysatorschicht eingebracht. Dabei kann zur Herstellung der anodischen Katalysatorschicht auch ein Trägermaterial zum Einsatz kommen, auf das das anodische Katalysatormaterial als katalytisch aktive Spezies in einem Beschichtungsprozess aufgebracht wird.

In vorteilhafter Ausgestaltung des Verfahrens wird die anodische Katalysatorschicht benachbart zur Schutzschicht angeordnet. Bevorzugt ist dabei die unmittelbar benachbarte Anordnung von anodischer Katalysatorschicht und Schutzschicht der Gasdiffusionsschicht, so dass diese eine gemeinsame Grenzfläche bilden.

In bevorzugter Ausgestaltung des Verfahrens wird die Schutzschicht mittels Plasma-Vapour-Deposition, Plasma-Assisted-Chemical-Vapor-Deposition (PACVD), Atomic-Layer Deposition oder Pulsed-Laser Deposition (PLD) auf einem Trägermaterial gebildet. Das Trägermaterial wird durch ein Grundmaterial der Gasdiffusionsschicht bereitgestellt, insbesondere Titan. Dieses ist für den Einsatzzweck als Teil der anodischen Halbzelle für eine elektrische Kontaktierung und homogene Stromleitung sowie für den Fluidtransport in der Formgebung entsprechend ausgestaltet. Inbesondere die Plasma-Assisted-Chemical-Vapor-Deposition (PACVD) ist besonders vorteilhaft anwendbar für eine Gasdiffusionsschicht mit einer feinmaschigen Struktur, beispielsweise Titan-Metallgitter oder Vliese, der Gasdiffusionslagen

Gemäß einer weiter bevorzugten Ausgestaltung wird für die Schutzschicht eine Schichtdicke von etwa 50 nm bis 200 nm, insbesondere von etwa 80 nm bis 120 nm, ausgebildet.

Die gewünschte Wirkung als Schutz der Gasdiffusionsschicht vor Degradationseffekten sowie gleichmäßige elektrische Kontaktierung und homogene Stromdichteverteilung ist bereits unter Ausbildung einer sehr dünnen Schichtdicke für die Schutzschicht erreichbar. Der Materialeinsatz und der gewählte Beschichtungsprozess sind unter wirtschaftlichen Gesichtspunkten sehr günstig. So kann ein Aufbringen mittels chemischer Gasphasenabscheidung bei porösen Strukturen und Trägermaterialien bevorzugt sein, während ein Aufbringen mittels physikalischer Gasphasenabscheidung bei nicht-porösen Strukturen bevorzugt sein kann. Sowohl chemische Gasphasenabscheidung als auch insbesondere physikalische Gasphasenabscheidung ermöglichen vorteilhaft die Herstellung sehr dünner Schichten mit einer Schichtdicke im Bereich von einigen Nanometern bis einigen Mikrometern. Dadurch kann Material für das diffusionshemmende Schichtmaterial, vorzugsweise Iridium, bei der Ausbildung der Schutzschicht eingespart werden.

Der Begriff "aufbringen auf" bezeichnet im vorliegenden Zusammenhang nicht zwingend eine konkrete räumliche Anordnung im Sinne von "oberhalb". Vielmehr soll lediglich zum Ausdruck gebracht werden, dass die genannten Schichten benachbart zueinander angeordnet werden. Auch die Reihenfolge der Verfahrensschritte kann umgekehrt oder geändert werden, d. h. die Ausbildung der anodischen Halbzelle kann alternativ ausgehend von der Gasdiffusionsschicht oder der Kanalstruktur erfolgen. Weiter alternativ kann auch eine der mittleren Schichten, z. B. die Gasdiffusionsschicht oder die anodische Katalysatorschicht als Ausgangspunkt gewählt werden, auf die beidseits, die jeweils angrenzenden Schichten aufgebracht werden.

Der Aufbau der kathodischen Halbzelle kann in analoger Weise erfolgen, d. h. auf die der anodischen Katalysatorschicht gegenüberliegenden Seitenfläche der Polymer-Elektrolyt-Membran kann eine katalytische Schicht zur Katalyse der Kathodenreaktion, z. B. gemäß Gleichung (II), darauf eine Gasdiffusionsschicht und darauf optional eine Kanalstruktur, z. B. in Form einer Bipolarplatte, aufgebracht werden. Die dafür genutzten Materialien können bevorzugt an die in der kathodischen Halbzelle vorherrschenden Bedingungen angepasst werden, z. B. in Hinblick auf die Anforderungen an ihre Korrosionsbeständigkeit.

Ein weiterer Aspekt der Erfindung betrifft die Verwendung einer Elektrolysezelle zur elektrolytischen Erzeugung von Wasserstoff.

Somit können vorteilhafterweise in der kathodischen bzw. anodischen Halbzelle die Reaktionen gemäß den Gleichungen (I) und (II) ausgeführt werden, wenn die Elektrolysezelle von elektrischem Strom durchflossen wird.

Ein weiterer Aspekt der Erfindung betrifft die Verwendung eines Katalysatormaterials als diffusionshemmendes Schichtmaterial in einer Gasdiffusionsschicht einer anodischen Halbzelle einer Elektrolysezelle.

Bei dem Katalysatormaterial kann es sich beispielsweise um das vorstehend beschriebene anodische Katalysatormaterial handeln, so dass auf die diesbezüglichen Erläuterungen und Vorteile verwiesen wird. Das Material der Wahl ist bevorzugt Iridium und/oder Iridiumoxid. Ein gezielt eingebrachter Iridiumanteil in der Schutzschicht der Gasdiffusionselektrode hemmt den Eintrag und damit Verlust weiteren Katalysatormaterials aus der anodischen Katalysatorschicht in die Gasdiffusionsschicht. Iridium als Katalysatormaterial ist daher eine besonders vorteilhafte Verwendung als diffusionshemmendes Schichtmaterial.

Im Folgenden wird die Erfindung beispielhaft unter Bezugnahme auf die anliegenden Figuren anhand bevorzugter Ausführungsformen erläutert, wobei die nachfolgend dargestellten Merkmale sowohl jeweils für sich genommen als auch in verschiedenen Kombinationen miteinander einen Aspekt der Erfindung darstellen können. Es zeigen:
- Fig. 1: eine schematische Darstellung einer Elektrolysezelle zur Polymerelektrolytmembran-Elektrolyse gemäß dem Stand der Technik;
- Fig. 2: eine schematische Darstellung einer beispielhaften Elektrolysezelle;
- Fig. 3: eine anodische Halbzelle mit einem Ausschnitt der beispielhaften Gasdiffusionsschicht in schematischer Darstellung, und
- Fig. 4: ein Ablaufschema eines beispielhaften Verfahrens gemäß der Erfindung.

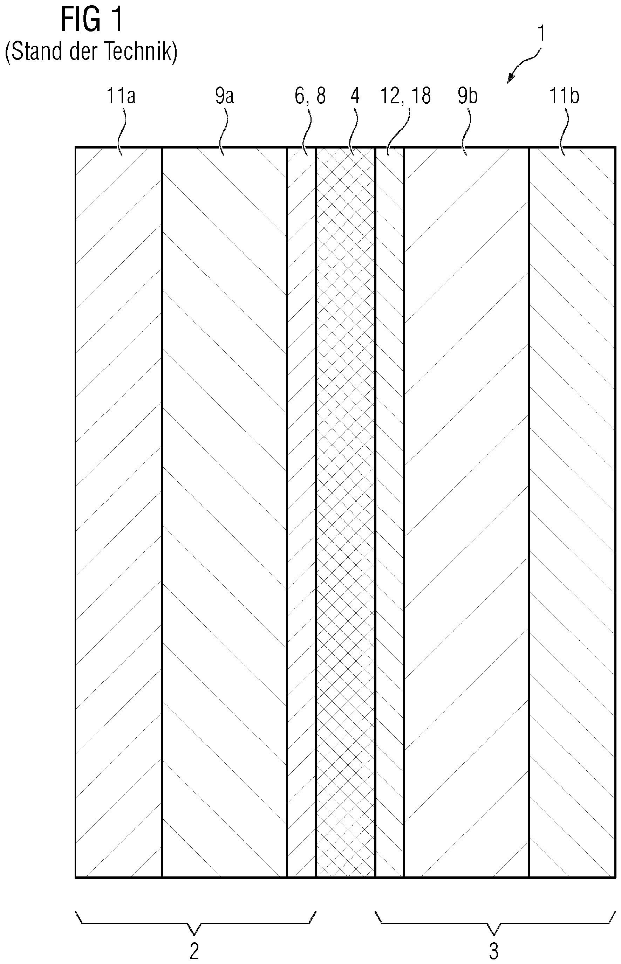

FIG 1 zeigt eine Elektrolysezelle 1 zur Polymer-Elektrolyt-Membran-Elektrolyse gemäß dem Stand der Technik in einer schematischen Darstellung. Die Elektrolysezelle 1 dient der elektrolytischen Erzeugung von Wasserstoff.

Die Elektrolysezelle 1 weist eine Polymer-Elektrolyt-Membran 4 auf. Auf der einen Seite der Polymer-Elektrolyt-Membran 4, in der Darstellung gemäß Figur 1 links, ist die kathodische Halbzelle 2 der Elektrolysezelle 1 angeordnet, auf der anderen Seite der Polymerelektrolytmembran 4, in der Darstellung gemäß Figur 1 rechts, ist die anodische Halbzelle 3 der Elektrolysezelle 1 angeordnet.

Die anodische Halbzelle 3 umfasst eine direkt benachbart zur Polymer-Elektrolyt-Membran 4 angeordnete anodische Katalysatorschicht 12, eine direkt benachbart zur anodischen Katalysatorschicht 12 angeordnete Gasdiffusionsschicht 9b und eine direkt benachbart zur Gasdiffusionsschicht 9b angeordnete Kanalstruktur 11b. Die anodische Katalysatorschicht 12 weist ein anodisches Katalysatormaterial 18 auf und katalysiert die Anodenreaktion gemäß Gleichung (I). Das anodische Katalysatormaterial 18 ist Iridium bzw. Iridiumoxid als katalytisch aktive Spezies gewählt, die in die anodische Katalysatorschicht eingebracht ist. Iridium bzw. Iridiumoxid weist eine hohe Oxidations- und Lösungsstabilität auf und ist daher gut geeignet als anodisches Katalysatormaterial. Zur Verringerung der Korrosion ist die Gasdiffusionsschicht 9b aus einem Material hergestellt, auf dessen Oberfläche sich schnell eine Passivierungsschicht ausbildet, z. B. aus Titan. Durch die Passivierung des Titans ist Titandioxid gebildet, das eine geringere Leitfähigkeit aufweist als das Titan. Die Kanalstruktur 11b ist als Bipolarplatte ausgebildet, so dass eine Stapelung mehrerer Elektrolysezelle 1 ermöglicht wird.

Die kathodische Halbzelle 2 umfasst eine kathodische Katalysatorschicht 8 mit einem kathodischen Katalysatormaterial 6, die direkt benachbart zur Polymer-Elektrolyt-Membran 4 angeordnet ist. Das kathodische Katalysatormaterial 6 ist zur Katalyse einer Reduktion von Wasserstoffionen, insbesondere gemäß Gleichung (II) zu molekularem Wasserstoff, ausgebildet. Auf der kathodischen Katalysatorschicht 8 ist ebenfalls eine Gasdiffusionsschicht 9a angeordnet. Im Unterschied zur Gasdiffusionsschicht 9b der anodischen Halbzelle 3 ist die Gasdiffusionsschicht 9a der kathodischen Halbzelle 2 aus Edelstahl gefertigt. Diese ist aufgrund des niedrigeren Oxidationspotentials in der kathodischen Halbzelle 2 im Vergleich zur anodischen Halbzelle 3 möglich und verringert die Kosten der Elektrolysezelle 2. Unmittelbar benachbart zur Gasdiffusionsschicht 9a ist ebenfalls eine Kanalstruktur 11a angeordnet, die, analog zur anodischen Halbzelle 3, als Bipolarplatte ausgebildet ist.

Nachteilig an dieser aus dem Stand der Technik bekannten Elektrolysezelle 1 ist wie eingangs erläutert, generell die Korrosionsanfälligkeit der Materialien. Vor allem in der anodischen Halbzelle 3 sind erhebliche Degradationseffekte zu verzeichnen, die die Standzeit der Elektrolysezelle 1 nachteilig beinträchtigen.

Hier ist einerseits der Eintrag von anodischem Katalysatormaterial 18 in die Gasdiffusionsschicht 9b mit der damit einhergehenden Bildung von Mischphasen in der Gasdiffusionsschicht 9b zu nennen. Dies führt zu einer Verringerung der katalytischen Aktivität der Anode und zu einer Degradation der Elektrode insgesamt während des Betriebs, was sehr nachteilig ist. Auch wird ein späterer Aufarbeitungsprozess einer über die Lebensdauer eines Elektrolyseurs genutzten Gasdiffusionsschicht erschwert. Speziell durch das Einbringen von Iridium bzw. Iridiumoxid als anodisches Katalysatormaterial 18 in die anodische Katalysatorschicht 12 ist die Bildung von Iridium-Phasen an der Grenzfläche zu der unmittelbar benachbarten Titan Gasdiffusionsschicht 9b zu beobachten. Die Folge ist eine damit verbundene Reduktion der katalytischen Aktivität der anodischen Halbzelle 3 durch Verlust der katalytisch aktiven Spezies in der anodischen Katalysatorschicht.

Weiterhin ist im Betrieb eine Erhöhung des lokalen elektrischen Kontaktwiderstandes zu beobachten. Dieser hat eine wesentliche Ursache in einer sich rasch zeigenden Oxidation (Passivierung) des Titans im Betrieb der Gasdiffusionsschicht 9b. Die Oxidation ist vorwiegend an der Oberfläche der Gasdiffusionsschicht 9b und angrenzenden stromführenden elektrischen Kontaktflächen zu verzeichnen. Diese dann aufgrund der Oxidation elektrisch schlecht leitenden lokalen Kontaktflächen führen zu hohen ohmschen Verlusten in der Elektrolysezelle und zu einer notwendigen Erhöhung der Zellspannung bei konstanter Stromdichte. Effizienzeinbußen und Degradation der Anode sind hier die Folge von inhomogener Stromverteilung mit nachteiligen lokalen Stromspitzen.

Auch auf Seiten der kathodischen Halbzelle 2 sind vor allem im Hinblick auf die durch elementaren Sauerstoff begünstigte Säurekorrosion nachteilige Effekte zu beobachten, auf die hier aber nicht näher eingegangen wird.

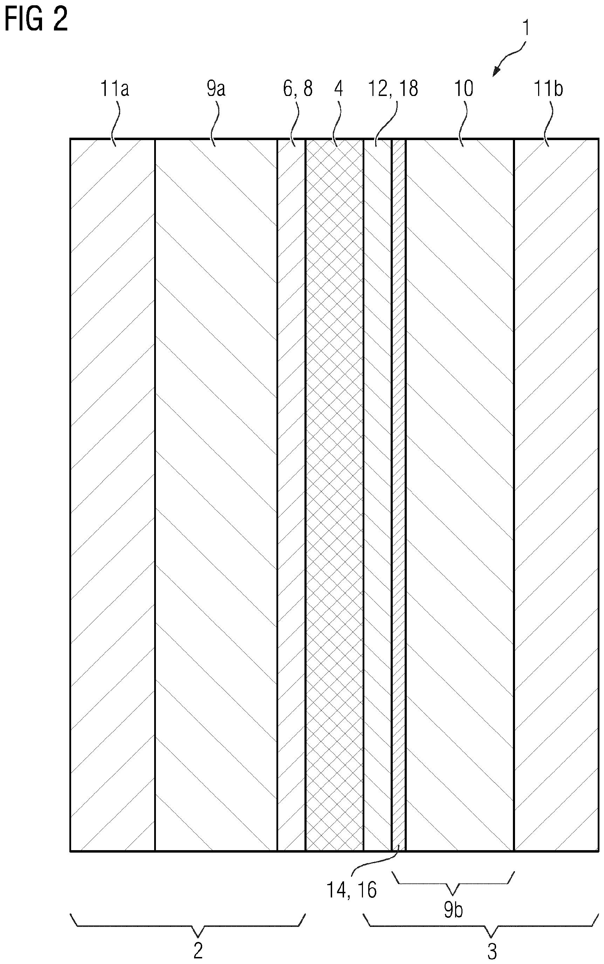

Zur Behebung dieser Nachteile an der anodischen Halbzelle 3 wird vorgeschlagen, in der anodische Halbzelle 3 die Gasdiffusionsschicht 9b derart auszubilden, dass der nachteilige und im Betrieb fortlaufende Eintrag des anodischen Katalysatormaterials 18 in die Gasdiffusionsschicht 9b gehemmt ist oder bestenfalls sogar unterbunden. Hierzu weist die Gasdiffusionsschicht 9b eine Schutzschicht 14 auf, in die ein diffusionshemmendes Schichtmaterial 16 eingebracht ist. Eine solche auf vorteilhafte Weise modifizierte und weiterentwickelte Elektrolysezelle 1 ist beispielhaft in FIG 2 schematisch dargestellt.

Die kathodische Halbzelle 2 des in FIG 2 gezeigten Ausführungsbeispiels einer Elektrolysezelle 1 ist analog zur Elektrolysezelle gemäß FIG 1 aufgebaut, so dass auf die diesbezüglichen Ausführungen verwiesen werden kann.

Die anodische Halbzelle 3 weist, ebenfalls in Analogie zur Elektrolysezelle gemäß FIG 1, eine Gasdiffusionsschicht 9b und eine Kanalstruktur 11b auf. Ebenso ist eine anodische Katalysatorschicht 12 mit einem anodischen Katalysatormaterial 14 direkt benachbart zur Polymer-Elektrolyt-Membran 4 angeordnet, wobei das anodische Katalysatormaterial 14 zur Katalyse von Sauerstoff (OER), insbesondere gemäß Gleichung (I) zu molekularem Sauerstoff ausgebildet ist, welcher durch die Kanalstruktur 11b aus der anodischen Halbzelle 3 abgeleitet und weiterverarbeitet wird.

Im Unterschied zur Elektrolysezelle 2 gemäß FIG 2 weist die Gasdiffusionsschicht 9b zusätzlich eine Schutzschicht 14 auf, in die das diffusionshemmende Schichtmaterial 16 eingebracht ist. Das Schichtmaterial 16 ist hierbei als Iridium und/oder Iridiumoxid oder eine Mischung daraus ausgeführt, wobei das Schichtmaterial 16 entsprechend in die Gasdiffusionsschicht 9b eingebracht ist. Dies erfolgt beispielsweise dadurch, dass die Gasdiffusionsschicht 9b ein Trägermaterial 10 aufweist, das Titan enthält oder aus Titan ausgeführt ist. Das Trägermaterial 10 bildet zugleich den Grundkörper der Gasdiffusionsschicht 9b, auf den das Iridium aufweisende bzw. das auf Iridium basierende Schichtmaterial 16 mittels eines geeigneten Beschichtungsverfahren aufgebracht ist. Das anodische Katalysatormaterial 18 ist in die anodische Katalysatorschicht 12 eingebracht, die auf der einen Seite unmittelbar benachbart an die Schutzschicht 14 der Gasdiffusionsschicht 9b angrenzt. Auf der anderen Seite grenzt die anodische Katalysatorschicht 12 unmittelbar an die Polymer-Elektrolyt-Membran 4. Die diffusionshemmende Schutzschicht 14 der Gasdiffusionsschicht 9b ist als Iridiumbeschichtung auf dem Trägermaterial 10, im Beispiel Titan, ausgeführt und weist eine sehr geringe Schichtdicke von nur etwa 100 nm auf.

Dies ist besonders vorteilhaft für den geringen Materialbedarf an Iridium für die Schutzschicht 14. Zugleich ist der Eintrag von anodischem Katalysatormaterial 18 in die Gasdiffusionsschicht 9b sehr wirkungsvoll gehemmt. Die als Iridium aufweisende Schutzschicht 14 ausgeführte Beschichtung des Titan-Grundkörpers übernimmt zudem die Passivierungsaufgabe und führt weiterhin zu einer homogeneren Stromdichteverteilung über die Zellfläche der anodischen Halbzelle 3 aufgrund gleichmäßiger und langzeitstabiler elektrischer Kontaktierung. Durch die dünne Schutzschicht 14 aus Iridium und/oder Iridiumoxid ist eine Passivierungsschicht bereitgestellt ohne nennenswerte Erhöhung des elektrischen Widerstands. Die Elektronen können über die Schutzschicht 14 in das Titan Bulk-Material der Gasdiffusionsschicht 9b überführt werden.

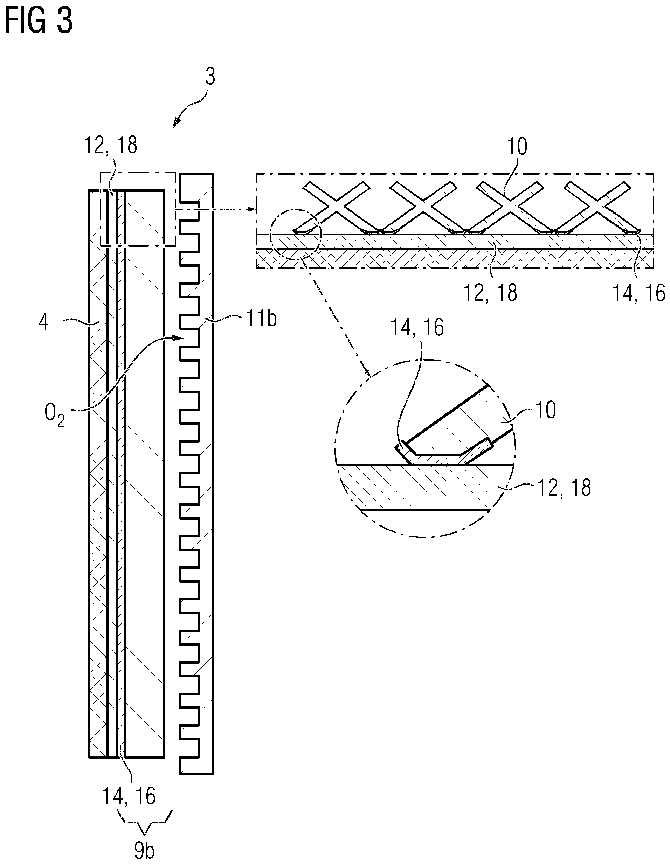

In FIG 3 ist eine anodische Halbzelle 3 mit einem Ausschnitt der beispielhaften Gasdiffusionsschicht 9b in schematischer und vergrößerter Darstellung gezeigt. Als Trägermaterial 10 findet Titan Verwendung, welches beispielsweise als Schichtung aus Steckmetall oder einem Spiralgeflecht ausgeführt sein kann oder aus anderen porösen und zugleich mechanisch stabilen Strukturen gebildet. So sind z.B. auch Vliese möglich, die etwa auf einem Drahtgewebe, Metallschaum oder einer gesinterten Metallscheibe schichtförmig oder lagenförmig angeordnet sind.

Bei der Materialwahl und der Struktur des Trägermaterials 10 ist zu beachten, dass durch die Gasdiffusionsschicht 9b eine optimale Verteilung des Wassers sowie der Abtransport der Produktgase sichergestellt wird. Die vorliegende Gasdiffusionsschicht 9b dient zudem als Stromverteiler der anodischen Halbzelle 3. Aus diesen Gründen ist die Gasdiffusionsschicht 8 aus einem elektrisch leitenden, porösen Material ausgebildet, hier beispielsweise Titan, das in entsprechender Struktur und Anordnung in die Gasdiffusionsschicht 9b eingebracht ist. Zudem werden durch die Gasdiffusionsschicht 9b im gezeigten Ausführungsbeispiel Bauteiltoleranzen, insbesondere die der anliegenden Kanalstruktur 11b, ausgeglichen, da eine gewisse Federelastizität gegenüber mechanischen Kräften durch die Porosität und die Materialwahl gegeben ist.

Auf dem titanbasierten Trägermaterial 10, das im Detailausschnitt der anodischen Halbzelle 3 der FIG 3 gitterförmig ausgeführt ist, ist eine dünne Schutzschicht 14 aus Iridium als Schichtmaterial 16 aufgebracht. Die Schutzschicht grenzt unmittelbar an die anodische Katalysatorschicht 12 an, die ebenfalls Iridium aufweist. In weiterer Ausschnittvergrößerung ist in FIG 3 ein Bereich zwischen anodischer Katalysatorschicht 12 und Gasdiffusionsschicht 9b etwas detaillierter gezeigt. Im Bereich der Kontaktpunkte zwischen Gasdiffusionsschicht 9b und angrenzender anodischer Katalysatorschicht 12 ist zusätzlich auf das Trägermaterial 10 der Gasdiffusionsschicht 9b eine dünne Schutzschicht 10 aufgebracht, welche Iridium und/oder Iridiumoxid aufweist. Diese Schutzschicht 14 wirkt sowohl als Diffusionsbarriere gegenüber Eintrag von anodischem Katalysatormaterial 18 aus der Katalysatorschicht 12 also auch als Passivierungsschicht für Gasdiffusionsschicht 9b. Die Schutzschicht 14 wirkt durch die getroffen vorteilhafte Materialwahl Iridium und/oder Iridiumoxid gleichzeitig auch als katalytisch aktive Schicht.

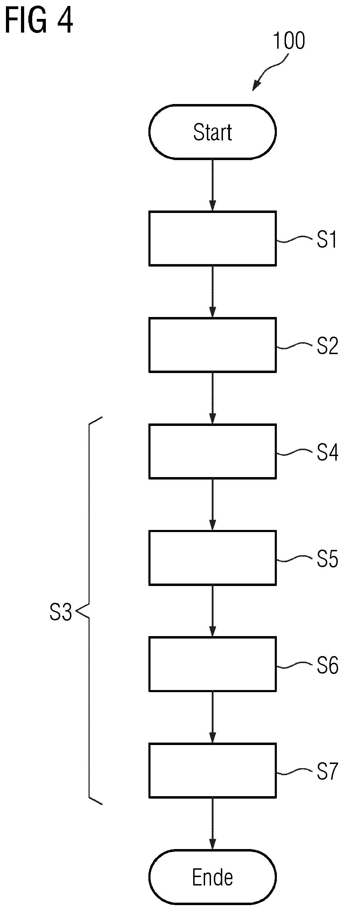

In FIG 4 zeigt ein vereinfachtes Ablaufschema eines beispielhaften Verfahrens 100 zur Herstellung einer Elektrolysezelle 1, beispielsweise der in FIG 2 gezeigten Elektrolysezelle 1. Nach dem Start des Verfahrens 100 wird im Schritt S1 eine Polymer-Elektrolyt-Membran 4 bereitgestellt. Anschließend wird im Schritt S2 eine an die Polymer-Elektrolyt-Membran 4 angrenzende kathodische Halbzelle 2 ausgebildet. Hierfür können die kathodische Katalysatorschicht 12, die Gasdiffusionsschicht 9a und die Kanalstruktur 11a entsprechend aufeinander angeordnet, z. B. aufeinander abgeschieden, werden.

Im Schritt S3 wird die anodische Halbzelle 3, ebenfalls angrenzend an die Polymer-Elektrolyt-Membran 4, jedoch gegenüberliegend und getrennt von der kathodischen Halbzelle 2, ausgebildet. Hierbei wird das anodische Katalysatormaterial 18, welches für die Katalyse von Protonen und molekularem Sauerstoff ausgebildet ist, in der anodischen Katalysatorschicht 12 der kathodischen Halbzelle 3 angeordnet. Die Schritte S2 und S3 können auch zeitlich parallel oder in umgekehrter Reihenfolge ausgeführt werden. Weiterhin wird in Schritt S3 die Gasdiffusionsschicht 9b in der anodischen Halbzelle 3 angeordnet, wobei die Gasdiffusionsschicht 9b ausgebildet ist zur Hemmung des Eintrags bzw. der Migration von anodischem Katalysatormaterial 18 in die Gasdiffusionsschicht 9b.

Der Schritt S3 weist im allgemeinen weitere Teilschritte S4 bis S7 auf, d.h. die anodische Halbzelle 2 wird im Ausführungsbeispiel mittels der Schritte S4 bis S7 ausgebildet. Diese Teilschritte sind an den jeweiligen Herstellungsprozess angepasst hinsichtlich der Reihenfolge. Sie können einzelne Schritte auch zeitlich parallel oder auch umgekehrter Reihenfolge ausgeführt werden:
Im Schritt S4 wird zunächst eine Schutzschicht 14 mit einem diffusionshemmenden Schichtmaterial 16 in die Gasdiffusionsschicht 9b eingebracht. Hierzu wird in einem Schritt S5 die Schutzschicht 14 mittels geeigneter Beschichtungsverfahren, wie etwa Plasma-Vapour-Deposition (PVD), Plasma-Assisted-Chemical-Vapor-Deposition (PACVD), Atomic-Layer Deposition (ALD) oder Pulsed-Laser Deposition (PLD) auf dem titanbasierenden Trägermaterial (10) gebildet. Inbesondere das Verfahren der Plasma-Assisted-Chemical-Vapor-Deposition (PACVD) ist besonders vorteilhaft anwendbar für die Anforderungen an eine Gasdiffusionsschicht mit einer feinmaschigen Struktur, beispielsweise Titan-Metallgitter oder Vliese, die in teilweise mehreren Gasdiffusionslagen angeortnet ist.

Unabhängig von dem je nach Anforderung gewählten Beschichtungsprozess wird in dem Verfahren in einem Schritt S5 die Schichtdicke bereits während des Beschichtungsprozesses überwacht, bis die gewünschte Schichtdicke von typischerweise nur etwa 100 nm erreicht ist. In einem Schritt S6 wird die anodische Katalysatorschicht 12 unmittelbar benachbart zu der Schutzschicht 14 angeordnet, so dass diese Schichten aneinandergrenzen. Hierdurch wird eine gemeinsame Grenzfläche oder Kontaktfläche zwischen anodischer Katalysatorschicht 12 und Schutzschicht 14 ausgebildet. Die die Schutzschicht 14 aufweisende Gasdiffusionsschicht 9b wird mithin auf die anodische Katalysatorschicht 7 aufgebracht, bevor im Schritt S7 auf die Gasdiffusionsschicht 9b eine Kanalstruktur 11b in Form einer Bipolarplatte aufgebracht wird.

Es sei angemerkt, dass die Ausbildung der kathodischen Halbzelle 2 auch ausgehend von der Kanalstruktur 11a erfolgen kann. D.h. als Ausgangspunkt kann die Kanalstruktur 11a gewählt werden, auf die zunächst die Gasdiffusionsschicht 9a, anschließend die kathodische Katalysatorschicht 8 und schließlich die Polymer-Elektrolyt-Membran 4 aufgebracht wird. Eine entsprechende Vorgehensweise ist für die anodische Halbzelle 3 möglich. Folglich können die Schichten und Strukturen der Elektrolysezelle 1 alternativ auch ausgehend von der Kanalstruktur 11a der kathodischen Halbzelle 2 oder ausgehend von der Kanalstruktur 11b der anodischen Halbzelle 3 aufgebaut werden.

Es versteht sich, dass andere Ausführungsformen benutzt und strukturelle oder logische Änderungen vorgenommen werden können, ohne von dem Schutzumfang der vorliegenden Erfindung abzuweichen. So können Merkmale der hierin beschriebenen Ausführungsbeispiels miteinander kombiniert werden können, sofern nicht spezifisch anders angegeben. Die Beschreibung des Ausführungsbeispiels ist deshalb nicht in einschränkendem Sinne aufzufassen, und der Schutzumfang der vorliegenden Erfindung wird durch die angefügten Ansprüche definiert.

Der hier verwendete Ausdruck "und/oder" bedeutet bei Benutzung in einer Reihe von zwei oder mehreren Elementen, dass jedes der aufgeführten Elemente allein verwendet werden kann, oder es kann jede Kombination von zwei oder mehr der aufgeführten Elemente verwendet werden.

## Patentansprüche

1. Elektrolysezelle (1) zur Polymerelektrolytmembran-Elektrolyse mit einer kathodischen Halbzelle (2) und einer anodischen Halbzelle (3), wobei die kathodische Halbzelle (2) und die anodische Halbzelle (3) mittels einer Polymerelektrolytmembran (4) voneinander getrennt sind, die anodische Halbzelle (3) aufweisend:
- eine Gasdiffusionsschicht (9b), ausgebildet zur Hemmung des Eintrags eines anodischen Katalysatormaterials (18) in die Gasdiffusionsschicht (9b).

2. Elektrolysezelle (1) nach Anspruch 1, die Gasdiffusionsschicht (9b) aufweisend:
- eine Schutzschicht (14), in die ein diffusionshemmendes Schichtmaterial (16) eingebracht ist.

3. Elektrolysezelle (1) nach Anspruch 1 oder 2, bei der das anodische Katalysatormaterial (18) in eine anodische Katalysatorschicht (12) eingebracht ist.

4. Elektrolysezelle (1) nach Anspruch 3, bei der die anodische Katalysatorschicht (12) benachbart zur Schutzschicht (14) angeordnet ist.

5. Elektrolysezelle (1) nach Anspruch 3 oder 4, bei der die anodische Katalysatorschicht (12) benachbart zur Polymerelektrolytmembran (4) angeordnet ist.

6. Elektrolysezelle (1) nach einem der Ansprüche 2 bis 5, wobei die Schutzschicht (14) eine Schichtdicke von etwa 50nm bis 200 nm, insbesondere von etwa 80 nm bis 120 nm, aufweist.

7. Elektrolysezelle (1) nach einem der Ansprüche 2 bis 6, bei der in die Schutzschicht (14) ein katalytisch aktives Schichtmaterial (14) eingebracht ist.

8. Elektrolysezelle (1) nach Anspruch 7, bei dem als Schichtmaterial (14) das anodische Katalysatormaterial (18) eingebracht ist.

9. Elektrolysezelle (1) nach einem der vorhergehenden Ansprüche, die anodische Halbzelle (3) aufweisend:
- Iridium und/oder Iridiumoxid oder deren Mischungen als anodisches Katalysatormaterial (18).

10. Elektrolysezelle (1) nach einem der vorhergehenden Ansprüche, die anodische Halbzelle (3) aufweisend:
- eine aus Titan als Grundmaterial gebildete Gasdiffusionsschicht (9b).

11. Verfahren (100) zur Herstellung einer Elektrolysezelle (1) zur Polymerelektrolytmembran-Elektrolyse, das Verfahren (100) aufweisend:
- S1: Bereitstellen einer Polymerelektrolytmembran (4),
- S2: Ausbilden einer an die Polymerelektrolytmembran (4) angrenzenden kathodischen Halbzelle (2), und
- S3: Ausbilden einer an die Polymerelektrolytmembran (4) angrenzenden anodischen Halbzelle (3), wobei die kathodische Halbzelle (2) und die anodische Halbzelle (3) mittels der Polymerelektrolytmembran (4) voneinander getrennt angeordnet werden und eine Gasdiffusionsschicht (9b), ausgebildet zur Hemmung des Eintrags eines anodischen Katalysatormaterials (18) in die Gasdiffusionsschicht (9b), in der anodischen Halbzelle (2) angeordnet wird.

12. Verfahren (100) zur Herstellung einer Elektrolysezelle (1) nach Anspruch 11, bei dem eine Schutzschicht (14) mit einem diffusionshemmenden Schichtmaterial (16) in die Gasdiffusionsschicht (9b) eingebracht wird.

13. Verfahren (100) zur Herstellung einer Elektrolysezelle (1) nach Anspruch 11 oder 12, bei dem das anodische Katalysatormaterial (18) in eine anodische Katalysatorschicht (12) eingebracht wird.

14. Verfahren (100) nach Anspruch 13, bei dem die anodische Katalysatorschicht (12) benachbart zur Schutzschicht (14) angeordnet wird.

15. Verfahren (100) nach einem der Ansprüche 12 bis 15, bei dem die Schutzschicht (14) mittels Plasma-Vapor-Deposition (PVD), Plasma-Assisted-Chemical-Vapor-Deposition (PACVD) oder Pulsed-Laser Deposition (PLD) auf einem Trägermaterial gebildet wird.

16. Verfahren nach einem der Ansprüche 12 bis 16, bei dem für die Schutzschicht (14) eine Schichtdicke von etwa 50nm bis 200 nm, insbesondere von etwa 80 nm bis 120 nm, ausgebildet wird.

17. Verwendung einer Elektrolysezelle (1) nach einem der Ansprüche 1 bis 8 zur elektrolytischen Erzeugung von Wasserstoff.

18. Verwendung eines Katalysatormaterials (18) als diffusionshemmendes Schichtmaterial (16) in einer Gasdiffusionsschicht (9b) einer anodischen Halbzelle (3) einer Elektrolysezelle (1).
